# EUROPEAN PATENT SPECIFICATION

(11) **EP 3 923 629 B1**
(45) Date of publication and mention of the grant of the patent: **04.09.2024**
(21) Application number: 19917128.1
(22) Date of filing: 03.12.2019
(51) Int. Cl.: H04W 36/00, H04W 36/22, H04W 36/38, H04W 36/08

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 27.02.2019 CN 201910145495
(43) Date of publication of application: 15.12.2021
(73) Proprietor: Huawei Technologies Co., Ltd., Shenzhen, Guangdong 518129 (CN)
(72) Inventor: SHI, Xiaoli, Shenzhen, Guangdong 518129 (CN); WANG, Rui, Shenzhen, Guangdong 518129 (CN); DAI, Mingzeng, Shenzhen, Guangdong 518129 (CN); ZENG, Qinghai, Shenzhen, Guangdong 518129 (CN)
(74) Representative: Maiwald GmbH
(86) International application number: PCT/CN2019/122823
(87) International publication number: WO 2020/173162

(56) References cited:
- WO-A1-2018/028698
- WO-A1-2018/171918
- CN-A- 105 101 311
- CN-A- 108 024 314
- CN-A- 108 282 832
- ZTE: "Discussion on inter RAT HO path selection", vol. RAN WG3, no. Prague, Czech; 20171009 - 20171013, 9 October 2017 (2017-10-09), XP051343902, Retrieved from the Internet <URL:http://www.3gpp.org/ftp/Meetings_3GPP_SYNC/RAN3/Docs/> [retrieved on 20171009]
- OPPO: "Discussion on EPC and 5GC Selection during Intra-LTE Handover with CN Type Change", vol. RAN WG2, no. Reno, USA; 20171127 - 20171201, 17 November 2017 (2017-11-17), XP051371359, Retrieved from the Internet <URL:http://www.3gpp.org/ftp/tsg%5Fran/WG2%5FRL2/TSGR2%5F100/Docs/> [retrieved on 20171117]
- VODAFONE: "Reducing the Impact of Option 5 on EPC Service Request Procedure and the Need to Restore Core Network Overload Protection", R2-1814873, 3GPP RAN WG2 MEETING #103BIS, 12 October 2018 (2018-10-12), XP051524253, DOI: 20200218130306A
- OPPO: "Discussion on Handling CN Overload in eLTE", R2-1818556, 3GPP TSG-RAN2 MEETING #104, 16 November 2018 (2018-11-16), XP051558031, DOI: 20200218131159A

## Description

### TECHNICAL FIELD

This application relates to the field of mobile communication technologies, and in particular, to a communication method and apparatus.

### BACKGROUND

In a 4^{th} generation (the 4^{th} generation, 4G) mobile communication long term evolution (long term evolution, LTE) system, an access network device accesses an evolved packet core (evolved packet core, EPC) through an S1 interface. The EPC may also be referred to as a 4G core network. In addition, access network devices are connected to each other through an X2 interface for information exchange.

In a 5^{th} generation (the 5^{th} generation, 5G) mobile communication new radio (new radio, NR) system, an access network device accesses a 5G core network (5G core network, 5GC) through an NG interface. The 5G core network may also be referred to as a next generation-core (next generation-core, NG-core) network. In addition, access network devices are connected to each other through an Xn interface for information exchange.

During evolution from 4G to 5G, there is an enhanced long term evolution (enhanced long term evolution, eLTE) system between the LTE system and the NR system. An access network device in the eLTE system may access both the EPC and the 5G core network. When a terminal device needs to be handed over from a source access network device to a target access network device that is in the eLTE system, it needs to be considered whether the EPC or the 5G core network accessed by the target access network device serves the terminal device. Currently, the source access network device may decide/determine whether the EPC or the 5G core network serves the terminal device. However, how the source access network device determines a specific network is still to be determined.

ZTE: "Discusssion on inter RAT HO path selection", 3GPP DRAFT; R3-173474, Mobile Copetence Centre; 650, Route des Lucioles; F-06921, Sophia-Antipolis Cedex; France, vol. RAN WG3, no. Prague, Czech, 20171009-20171013, 9 October 2017, discusses the inter RAT hanbdover scenarios where the target ng-eNB is connected with both 5GC and EPC.

### SUMMARY

The invention is defined by the appended claims.

Embodiments of this application provide a communication method and apparatus, so that a source access network device effectively determines whether an EPC or a 5G core network accessed by a target access network device serves a terminal device that is to be handed over to the target access network device and that is covered by the source access network device.

### BRIEF DESCRIPTION OF DRAWINGS

FIG. 1 is a schematic diagram of a network architecture to which an embodiment of this application may be applied;
FIG. 2 is a flowchart of implementation of a communication method according to an embodiment of this application;
FIG. 3 is a flowchart of implementation of another communication method according to an embodiment of this application;
FIG. 4 is a flowchart of implementation of another communication method according to an embodiment of this application;
FIG. 5 is a schematic diagram of another network architecture to which an embodiment of this application may be applied;
FIG. 6 is a flowchart of implementation of still another communication method according to an embodiment of this application;
FIG. 7 is a flowchart of implementation of still another communication method which is not part of the present invention;
FIG. 8 is a schematic structural diagram of a communication apparatus according to an embodiment of this application; and
FIG. 9 is a schematic structural diagram of another communication apparatus according to an embodiment of this application.

### DESCRIPTION OF EMBODIMENTS

To make the objectives, the technical solutions, and advantages of the embodiments of this application clearer, the following further describes the embodiments of this application in detail with reference to the accompanying drawings.

In the following descriptions, some terms in the embodiments of this application are described, to help a person skilled in the art have a better understanding.
(1) A terminal device includes a device that provides a user with voice and/or data connectivity, for example, may include a handheld device having a wireless connection function, or a processing device connected to a wireless modem. The terminal device may communicate with a core network through a radio access network (radio access network, RAN), and exchange voice and/or a data packet with the RAN. The terminal device may include user equipment (user equipment, UE), a wireless terminal device, a mobile terminal device, a subscriber unit (subscriber unit), a subscriber station (subscriber station), a mobile station (mobile station), a mobile console (mobile), a remote station (remote station), an access point (access point, AP), a remote terminal device (remote terminal), an access terminal device (access terminal), a user terminal device (user terminal), a user agent (user agent), a user device (user device), or the like. For example, the terminal device may include a mobile phone (or referred to as a "cellular" phone), a computer having a mobile terminal device, a portable, pocket-sized, handheld, computer built-in mobile apparatus, or a smart wearable device. For example, the terminal device may be a device such as a personal communications service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capacity, or a device with a limited computing capability. For example, the terminal device includes an information sensing device such as a barcode, radio frequency identification (radio frequency identification, RFID), a sensor, a global positioning system (global positioning system, GPS), or a laser scanner.
   As an example instead of a limitation, the terminal device in the embodiments of this application may alternatively be a wearable device or the like. The wearable device may also be referred to as a wearable intelligent device, and is a general term for wearable devices such as glasses, gloves, watches, clothes, and shoes that are developed by applying wearable technologies to intelligent designs of daily wear. The wearable device is a portable device that can be directly worn by a user or integrated into clothes or an accessory of a user. The wearable device is not only a hardware device, but also implements a powerful function through software support, data packet exchange, and cloud interaction. Generalized wearable intelligent devices include full-featured and large-size devices, such as smart watches or smart glasses, that can implement complete or partial functions without depending on smartphones; and devices, such as various smart bands, smart helmets, or smart jewelry for monitoring physical signs, that focus on only one type of application functions and need to work with other devices such as smartphones.
(2) An access network device is a radio access network (radio access network, RAN) node (or device) that connects a terminal device to a wireless network, and may also be referred to as a base station. Currently, examples of some RAN nodes are: a gNodeB (gNodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base band unit, BBU), a wireless fidelity (wireless fidelity, Wifi) access point (access point, AP), or the like. In addition, in a network structure, the RAN may include a centralized unit (centralized unit, CU) node and at least one distributed unit (distributed unit, DU) node, and the structure may be usually referred to as a CU-DU architecture. In this structure, protocol layers of an eNB in a long term evolution (long term evolution, LTE) system are split, where functions of some protocol layers are controlled by a CU in a centralized manner, functions of some or all of remaining protocol layers are distributed in DUs, and the CU controls the DUs in a centralized manner.
(3) "At least one" means one or more, and "a plurality of" means two or more than two. The term "and/or" describes an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. The term "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, unless otherwise stated, ordinal numbers such as "first" and "second" in the embodiments of this application are used to distinguish between a plurality of objects, but are not intended to limit a sequence, a time sequence, priorities, or importance of the plurality of objects.

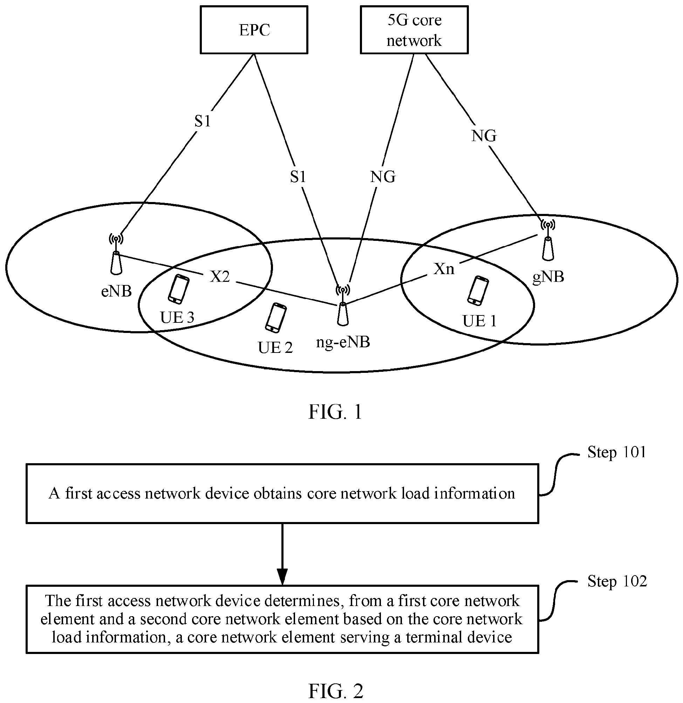

FIG. 1 is a schematic diagram of a network architecture to which an embodiment of this application may be applied. As shown in FIG. 1, the network architecture includes an LTE system, an eLTE system, and an NR system, and an EPC and a 5G core network coexist. Abase station (an eNB in FIG. 1 is used as an example) in the LTE system accesses the core network EPC in the LTE system through an S1 interface. Abase station (a gNB in FIG. 1 is used as an example) in the NR system accesses the 5G core network in the NR system through an NG interface. An eLTE base station in the eLTE system may also be referred to as a next-generation eNB (ng-eNB). The eLTE base station may access the core network EPC in the LTE system through the S1 interface, and may access the 5G core network in the NR system through the NG interface. In other words, the eLTE base station may access both the EPC and the 5G core network. UE 2 covered by the eLTE base station may access the EPC or the 5G core network based on a configuration of the eLTE base station, and further be served by the EPC or the 5G core network. It should be understood that the network architecture shown in FIG. 1 is described by using only an example in which three base stations and three UEs are included. However, this embodiment of this application is not limited thereto. For example, the network architecture may further include more base stations. Similarly, the network architecture may also include more UEs, and may further include another device.

In the network architecture shown in FIG. 1, when UE 3 covered by the eNB or UE 1 covered by the gNB needs to be handed over to the ng-eNB, it needs to be determined whether the EPC or the 5G core network accessed by the ng-eNB serves the UE 1/UE 3. Currently, it is considered that the eNB/gNB decides/determines whether the EPC or the 5G core network serves the UE 1/UE 3. How the eNB/gNB determines a specific network is a technical problem to be resolved.

Based on the foregoing existing problem, an embodiment of this application provides a communication method. According to the method, the eNB/gNB determines, based on core network load information, whether the EPC or the 5G core network serves the UE 1/UE 3.

FIG. 2 is a flowchart of implementation of a communication method according to an embodiment of this application. Referring to FIG. 2, the method includes the following steps.

Step 101: A first access network device obtains core network load information, where the core network load information indicates load of a first core network element and/or load of a second core network element.

In this embodiment of this application, the first core network element and the second core network element may be core network elements of different standards/types. For example, the first core network element is a 4G core network element, and the second core network element is a 5G core network element. For another example, the first core network element is a 5G core network element, and the second core network element is a 4G core network element. In this application, the 4G core network element may include, for example, a mobility management entity (mobility management entity, MME) or a serving gateway (serving gateway, SGW), and the 5G core network element may include, for example, an access and mobility management function (access and mobility management function, AMF) network element or a user plane function (user plane function, UPF) network element. It may be understood that the 4G core network element in this application is a core network element in a 4G core network, and correspondingly, the 5G core network element is a core network element in a 5G core network.

In this embodiment of this application, before performing step 101, the first access network device further determines that a terminal device covered by the first access network device/a terminal device served by the first access network device needs to be handed over to a second access network device. The second access network device is an access network device that accesses the first core network element and the second core network element. The first access network device and the second access network device may be adjacent access network devices. In this embodiment of this application, the first access network device is an access network device that accesses the first core network element or the second core network element, or an access network device that accesses a core network element other than the first core network element or the second core network element. This is not limited in this application.

It should be noted that, unless otherwise specified, the terminal device in the following embodiments of this application is a terminal device that is covered by the first access network device/that is served by the first access network device and that needs to be handed over to the second access network device.

In this embodiment of this application, that the core network load information indicates load of a first core network element and/or load of a second core network element may include the following three implementations.

In a first implementation, the core network load information indicates the load of the first core network element and the load of the second core network element. In this implementation, the core network load information includes but is not limited to: overload information of the first core network element and the second core network element; capacity information of the first core network element and the second core network element; and optionally a quantity of terminal devices served by the first core network element by using the second access network device and a quantity of terminal devices served by the second core network element by using the second access network device; or resource utilization and/or a quantity of terminal devices of the first core network element and the second core network element.

Based on the first implementation, for example, the overload information of the first core network element and the second core network element includes a first indication and a type of the first core network element, where the first indication and the type of the first core network element indicate whether the first core network element is overloaded; and include a second indication and a type of the second core network element, where the second indication and the type of the second core network element are used to indicate whether the second core network element is overloaded.

In this embodiment of this application, the first indication and the second indication may be at least one bit (bit), and a value of the at least one bit is used to indicate whether the core network element is overloaded. For example, it is assumed that the first indication is one bit, and a value of the bit may be 0 or 1. When the value of the bit is 0, the first indication and the type of the first core network element indicate that the first core network element is not overloaded. When the value of the bit is 1, the first indication and the type of the first core network element indicate that the first core network element is overloaded. Alternatively, when the value of the bit is 1, the first indication and the type of the first core network element indicate that the first core network element is overloaded. When the value of the bit is 0, the first indication and the type of the first core network element indicate that the first core network element is not overloaded. This is not limited in this application. For another example, it is assumed that the second indication is one bit, and a value of the bit may be 0 or 1. When the value of the bit is 0, the second indication and the type of the second core network element indicate that the second core network element is not overloaded. When the value of the bit is 1, the second indication and the type of the second core network element indicate that the second core network element is overloaded. Alternatively, when the value of the bit is 1, the second indication and the type of the second core network element indicate that the second core network element is not overloaded. When the value of the bit is 0, the second indication and the type of the second core network element indicate that the second core network element is overloaded. This is not limited in this application.

In this embodiment of this application, the type of the first core network element is used to identify the first core network element. For example, the type of the first core network element may be an MME type or an AMF type. When the type of the first core network element is the MME type, the first core network element is an MME network element, and when the type of the first core network element is the AMF type, the first core network element is an AMF. Correspondingly, the type of the second core network element is used to identify the second core network element. For example, the type of the second core network element may be an MME type or an AMF type. When the type of the second core network element is the MME type, the second core network element is an MME network element, and when the type of the second core network element is the AMF type, the second core network element is an AMF.

Table 1 shows an example of possible overload information of the first core network element and the second core network element according to this embodiment of this application. In Table 1, for example, a type of the first core network element is an MME type, and a type of the second core network element is an AMF type.

**Table 1**

| Overload information of the first core network element | Overload information of the second core network element |
|---|---|
| First indication (indicating overloaded or not overloaded) | Second indication (indicating overloaded or not overloaded) |
| MME | AMF |

It should be noted that, in this embodiment of this application, that the core network element is overloaded may be understood as that the load of the core network element is greater than/exceeds maximum load of the core network element, or may be understood as that a quantity of terminal devices that access the core network element is greater than/exceeds a maximum quantity of terminal devices that can access the core network element, or may be understood as that a quantity of radio resource control (radio resource control, RRC) connections that access the core network element is greater than/exceeds a maximum quantity of RRC connections that can access the core network element. Similarly, in this embodiment of this application, that the core network element is not overloaded may be understood as that the load of the core network element is less than/does not exceed maximum load of the core network element, or may be understood as that a quantity of terminal devices that access the core network element is less than/does not exceed a maximum quantity of terminal devices that can access the core network element, or may be understood as that a quantity of RRC connections that access the core network element is less than/does not exceed a maximum quantity of RRC connections that can access the core network element.

Moreover, the overload includes an overload level. If both the first core network element and the second core network element are overloaded, a degree of overload of the first core network element and a degree of overload of the second core network element may further be determined based on the overload level. For example, the overload level may include a first overload level, a second overload level, a third overload level, and the like, where each overload level represents a degree of overload of the core network element.

Table 2 shows the overload information of the first core network element and the second core network element according to this embodiment of this application. In Table 2, for example, a type of the first core network element is an MME type, and a type of the second core network element is an AMF type.

**Table 2**

| Overload information of the first core network element | Overload information of the second core network element |
|---|---|
| First indication (indicating a first overload level) | Second indication (indicating a second overload level) |
| MME | AMF |

Based on the first implementation, for example, the capacity information of the first core network element and the second core network element may include a capacity of the first core network element and the type of the first core network element, and include a capacity of the second core network element and the type of the second core network element. The capacity information indicates a capacity relationship between the first core network element and the second core network element. The capacity relationship may include, for example, "greater than", "less than", or "equal to".

Table 3 shows an example of possible capacity information of the first core network element and the second core network element according to this embodiment of this application. In Table 3, for example, a type of the first core network element is an MME type, and a type of the second core network element is an AMF type.

**Table 3**

| Capacity information of the first core network element | Capacity information of the second core network element |
|---|---|
| Capacity of the first core network element | Capacity of the second core network element |
| MME | AMF |

It should be noted that, in this embodiment of this application, the capacity of the first core network element may be a total capacity of the first core network element, or may be a remaining capacity of the first core network element. Correspondingly, the capacity of the second core network element may be a total capacity of the second core network element, or may be a remaining capacity of the second core network element. In this embodiment of this application, the capacity of the core network element may be a quantity of terminal devices that can access the core network element/a quantity of RRCs that can access the core network element. The following is described by using an example in which the capacity of the first core network element is a quantity of remaining terminal devices that can access the first core network element, and the capacity of the second core network element is a quantity of remaining terminal devices that can access the second core network element.

In a possible implementation, the capacity in this embodiment of this application may include a capacity level. For example, the capacity level may include a first capacity level, a second capacity level, a third capacity level, and the like, where each capacity level may represent a quantity of remaining terminal devices that can access the core network element. For example, it is assumed that the capacity level includes a first capacity level, a second capacity level, and a third capacity level. The first capacity level indicates that the core network element can access a remaining of 50 terminal devices, the second capacity level indicates that the core network element can access a remaining of 200 terminal devices, and the third capacity level indicates that the core network element can access a remaining of 400 terminal devices.

Table 4 shows another example of possible capacity information of the first core network element and the second core network element according to this embodiment of this application. In Table 4, for example, a type of the first core network element is an MME type, and a type of the second core network element is an AMF type.

**Table 4**

| Capacity information of the first core network element | Capacity information of the second core network element |
|---|---|
| First capacity level | Second capacity level |
| MME | AMF |

In this embodiment of this application, the quantity of terminal devices served by the first core network element by using the second access network device may be understood as a quantity of terminal devices or a quantity of radio resource control (radio resource control, RRC) connections that are allowed by the second access network device to access the first core network element, a level of a quantity of terminal devices, or a level of a quantity of RRC connections. Similarly, the quantity of terminal devices served by the second core network element by using the second access network device may be understood as a quantity of terminal devices or a quantity of RRC connections that are allowed by the second access network device to access the second core network element, a level of a quantity of terminal devices, or a level of a quantity of RRC connections.

In a possible implementation, the core network load information may include a ratio of the quantity of terminal devices served by the first core network element by using the second access network device to the quantity of terminal devices served by the second core network element by using the second access network device. Alternatively, the core network load information may include a ratio of the quantity of RRC connections that are allowed by the second access network device to access the first core network element to the quantity of RRC connections that are allowed by the second access network device to access the second core network element.

In this embodiment of this application, the quantity of terminal devices of the first core network element may be understood as a quantity of terminal devices that access the first core network element or a quantity of terminal devices served by the first core network element. Similarly, the quantity of terminal devices of the second core network element may be understood as a quantity of terminal devices that access the second core network element or a quantity of terminal devices served by the second core network element.

In the foregoing first implementation, the core network load information indicates the load of the first core network element and the load of the second core network element. In this way, the first access network device may separately determine the load of the first core network element and the load of the second core network element based on the core network load information. To reduce signaling overheads, this embodiment of this application further provides a second implementation and a third implementation. It may be agreed in advance that the core network load information indicates only the load of the first core network element or the load of the second core network element. The following describes the second implementation and the third implementation in detail.

In the second implementation, the core network load information indicates the load of the first core network element. In this implementation, the core network load information may include but is not limited to one or more of the following: overload information of the first core network element; capacity information of the first core network element; a quantity of terminal devices served by the first core network element by using the second access network device; or resource utilization and/or a quantity of terminal devices of the first core network element.

Based on the second implementation, for example, the overload information of the first core network element may include a third indication and/or a type of the first core network element, and the overload information indicates whether the first core network element is overloaded. The following three possible implementations are as follows.

Based on the second implementation, in a possible implementation, the overload information of the first core network element includes the third indication and the type of the first core network element, and the overload information indicates whether the first core network element is overloaded. For example, it is assumed that it is agreed in advance that the core network load information indicates only load of a core network element that is overloaded and that is in the first core network element and the second core network element, and it is assumed that the first core network element is overloaded. In this case, the overload information of the first core network element may include the third indication and the type of the first core network element, and the overload information is used to indicate that the first core network element is overloaded. For another example, it is assumed that it is agreed in advance that the core network load information indicates only load of the first core network element that is not overloaded and that is in the first core network element and the second core network element, and it is assumed that the first core network element is not overloaded. In this case, the overload information of the first core network element may include the third indication and the type of the first core network element, and the overload information is used to indicate that the first core network element is not overloaded.

Table 5 shows an example of possible overload information of the first core network element according to this embodiment of this application. In Table 5, for example, a type of the first core network element is an MME type.

**Table 5**

| |
|---|
| Overload information of the first core network element |
| Third indication (indicating overloaded or not overloaded) |
| MME |

Based on the second implementation, in another possible implementation, the overload information of the first core network element includes the type of the first core network element, and the overload information indicates whether the first core network element is overloaded. For example, it is assumed that it is agreed in advance that the core network load information indicates only a type of a core network element that is overloaded and that is in the first core network element and the second core network element, and it is assumed that the first core network element is overloaded. In this case, the overload information of the first core network element may include the type of the first core network element, and the type of the first core network element is used to indicate that the first core network element is overloaded. For another example, it is assumed that it is agreed in advance that the core network load information indicates only a type of the first core network element that is not overloaded and that is in the first core network element and the second core network element, and it is assumed that the first core network element is not overloaded. In this case, the overload information of the first core network element may include the type of the first core network element, and the type of the first core network element is used to indicate that the first core network element is not overloaded.

Table 6 shows another example of possible overload information of the first core network element according to this embodiment of this application. In Table 6, for example, a type of the first core network element is an MME type.

**Table 6**

| |
|---|
| Overload information of the first core network element |
| MME |

Based on the second implementation, in still another possible implementation, the overload information of the first core network element includes the third indication, and the overload information indicates whether the first core network element is overloaded. For example, it is assumed that it is agreed in advance that the core network load information indicates only a core network element that is overloaded and that is in the first core network element and the second core network element, and it is assumed that the first core network element is overloaded. In this case, the overload information of the first core network element may include the third indication, and the third indication is used to indicate that the first core network element is overloaded. For another example, it is assumed that it is agreed in advance that the core network load information indicates only a core network element that is not overloaded and that is in the first core network element and the second core network element, and it is assumed that the first core network element is not overloaded. In this case, the overload information of the first core network element may include the third indication, and the third indication is used to indicate that the first core network element is not overloaded. In this implementation, it may be agreed in advance that the third indication is associated with the first core network element, and the third indication is used to indicate whether the first core network element is overloaded.

Table 7 shows still another example of possible overload information of the first core network element according to this embodiment of this application. In Table 7, for example, a type of the first core network element is an MME type.

**Table 7**

| |
|---|
| Overload information of the first core network element |
| Third indication (indicating that the first core network element is overloaded or not overloaded) |

Based on the second implementation, in still another possible implementation, the overload information of the first core network element indicates a type/load of a core network element with a relatively high degree of load in the first core network element and the second core network element, or indicates a type/load of a core network element with a relatively low degree of load in the first core network element and the second core network element.

In this embodiment of this application, the third indication may be at least one bit (bit), and a value of the at least one bit may be used to indicate whether the core network element is overloaded.

In addition, to reduce signaling overheads, in the second implementation, it may be agreed in advance that the core network load information indicates only a type/capacity information of a core network element with a relatively high capacity in the first core network element and the second core network element, or indicates only a type/capacity information of a core network element with a relatively low capacity in the first core network element and the second core network element. The following describes the implementation in detail.

Based on the second implementation, for example, the capacity information of the first core network element may include a fourth indication and/or the type of the first core network device, and the capacity information indicates that a capacity of the first core network element is greater than or less than a capacity of the second core network element. The following three possible implementations are as follows.

Based on the second implementation, in a possible implementation, the capacity information of the first core network element includes the fourth indication and the type of the first core network device, and the capacity information indicates that the capacity of the first core network element is greater than or less than the capacity of the second core network element. For example, it is assumed that it is agreed in advance that the core network load information indicates only a type/capacity of a core network element with a relatively high capacity in the first core network element and the second core network element, and it is assumed that the capacity of the first core network element is relatively high. In this case, the capacity information of the first core network element may include the fourth indication and the type of the first core network element, and the capacity information is used to indicate that the capacity of the first core network element is greater than the capacity of the second core network element. For another example, it is assumed that it is agreed in advance that the core network load information indicates only a type/capacity of a core network element with a relatively low capacity in the first core network element and the second core network element, and it is assumed that the capacity of the first core network element is relatively low. In this case, the capacity information of the first core network element may include the fourth indication and the type of the first core network element, and the capacity information is used to indicate that the capacity of the first core network element is less than the capacity of the second core network element.

Table 8 shows an example of possible capacity information of the first core network element according to this embodiment of this application. In Table 8, for example, a type of the first core network element is an AMF type. In other words, in Table 8, for example, the first core network element is an AMF.

**Table 8**

| |
|---|
| Capacity information of the first core network element |
| Fourth indication (indicating that a capacity of the AMF is greater than or less than a capacity of the second core network element) |
| AMF |

Based on the second implementation, in another possible implementation, the capacity information of the first core network element includes the type of the first core network device, and the capacity information indicates that the capacity of the first core network element is greater than or less than the capacity of the second core network element. For example, it is assumed that it is agreed in advance that the core network load information indicates only a type of a core network element with a relatively high capacity in the first core network element and the second core network element, and it is assumed that the capacity of the first core network element is relatively high. In this case, the capacity information of the first core network element may include the type of the first core network element, and the type of the first core network element is used to indicate that the capacity of the first core network element is greater than the capacity of the second core network element. For another example, it is assumed that it is agreed in advance that the core network load information indicates only a type of a core network element with a relatively low capacity in the first core network element and the second core network element, and it is assumed that the capacity of the first core network element is relatively low. In this case, the capacity information of the first core network element may include the type of the first core network element, and the type of the first core network element is used to indicate that the capacity of the first core network element is less than the capacity of the second core network element.

Table 9 shows another example of possible capacity information of the first core network element according to this embodiment of this application. In Table 9, for example, a type of the first core network element is an AMF type. In other words, in Table 9, for example, the first core network element is an AMF.

**Table 9**

| |
|---|
| Capacity information of the first core network element |
| AMF |

Based on the second implementation, in still another possible implementation, the capacity information of the first core network element includes the fourth indication, and the capacity information indicates that the capacity of the first core network element is greater than or less than the capacity of the second core network element. For example, it is assumed that it is agreed in advance that the core network load information indicates only load of a core network element with a relatively high capacity in the first core network element and the second core network element, and it is assumed that the capacity of the first core network element is relatively high. In this case, the capacity information of the first core network element may include the fourth indication, and the fourth indication is used to indicate that the capacity of the first core network element is greater than the capacity of the second core network element. For another example, it is assumed that it is agreed in advance that the core network load information indicates only load of a core network element with a relatively low capacity in the first core network element and the second core network element, and it is assumed that the capacity of the first core network element is relatively low. In this case, the capacity information of the first core network element may include the fourth indication, and the fourth indication is used to indicate that the capacity of the first core network element is less than the capacity of the second core network element. Herein, it may be understood that it is agreed in advance that the fourth indication is associated with the first core network element, and the fourth indication is used to indicate that the capacity of the first core network element is greater than or less than the capacity of the second core network element.

Table 10 shows still another example of possible capacity information of the first core network element according to this embodiment of this application. In Table 10, the capacity information of the first core network element includes a fourth indication, and the fourth indication is associated with the first core network element.

**Table 10**

| |
|---|
| Capacity information of the first core network element |
| Fourth indication (indicating that a capacity of the first core network element is greater than or less than a capacity of the second core network element) |

In this embodiment of this application, the fourth indication may be at least one bit (bit), and a value of the at least one bit may be used to indicate that the capacity of the first core network element is greater than or less than the capacity of the second core network element.

In the third implementation, the core network load information indicates the load of the second core network element. In this understanding, the core network load information may include but is not limited to one or more of the following: overload information of the second core network element; capacity information of the second core network element; a quantity of terminal devices served by the second core network element by using the second access network device; or resource utilization and/or a quantity of terminal devices of the second core network element.

The third implementation is similar to the second implementation. For details, refer to descriptions in the second implementation. Details are not described herein again.

How the first access network device obtains the core network load information is not limited in this embodiment of this application. Three possible implementations are provided below.

In a first possible implementation, the first access network device receives the core network load information from the second access network device. It should be noted that the first access network device may receive the core network load information from the second access network device by using a newly defined Xn/X2 interface message or an existing message. In this implementation, before sending the core network load information to the first access network device, the second access network device may determine the core network load information.

For example, that the second access network device determines the core network load information is described by using an example in which the core network load information is the overload information of the first core network element and the second core network element. The second access network device may determine the overload information of the first core network element and the second core network element based on a message that is related to the overload information and that is received from the first core network element and the second core network element. For example, it is assumed that the second access network device receives an overload indication message from the first core network element. When the overload indication message includes an overload start (overload start) indication, the second access network device may determine, based on the overload start indication, that the first core network element is overloaded (which may be understood as that the first core network element is in an overload status). When the overload indication message includes an overload stop (overload stop) indication, the second access network device may determine, based on the overload stop indication, that the first core network element is not overloaded. Correspondingly, it is assumed that the second access network device receives an overload indication message from the second core network element. When the overload indication message includes an overload start (overload start) indication, the second access network device may determine, based on the overload start indication, that the second core network element is overloaded (which may be understood as that the second core network element is in an overload status). When the overload indication message includes an overload stop (overload stop) indication, the second access network device may determine, based on the overload stop indication, that the second core network element is not overloaded.

For another example, that the second access network device determines the core network load information is described by using an example in which the core network load information is the capacity information of the first core network element and the second core network element. The second access network device may determine the capacity information of the first core network element and the second core network element based on a message that is related to the capacity information and that is received from the first core network element and the second core network element. For example, the message related to the capacity information may include an SlING setup response (setup response) message or an MME/AMF configuration update (configuration update) message. Specifically, the second access network device may determine the capacity information based on a relative MME/AMF capacity information element included in the MME/AMF configuration update (configuration update) message.

In a second possible implementation, it is assumed that the first access network device is an access network device that accesses the first core network element. In this case, the first access network device may receive the core network load information from the first core network element. It should be noted herein that the core network load information may indicate only the load of the first core network element. Alternatively, it is assumed that the first access network device is an access network device that accesses the second core network element. In this case, the first access network device may receive the core network load information from the second core network element. Herein, the core network load information may indicate only the load of the second core network element.

In a third possible implementation, the first access network device obtains the pre-stored core network load information locally. In this implementation, the locally stored core network load information may be received in advance from the second access network device, the first core network element, or the second core network element.

It should be noted that, in addition to the foregoing three methods for obtaining the core network load information provided in this embodiment of this application, the first access network device may further obtain the core network load information by using another method. This is not limited in this application.

Step 102: The first access network device determines, from the first core network element and the second core network element based on the core network load information, a core network element serving a terminal device.

For example, the core network load information includes the overload information of the first core network element and/or the second core network element. Assuming that the first access network device determines, based on the overload information, that the first core network element is overloaded and that the second core network element is not overloaded, the first access network device may determine that the second core network element serves the terminal device.

For another example, the core network load information includes the overload level of the first core network element and/or the second core network element. Assuming that the first access network device determines, based on the overload level, that a degree of overload of the first core network element is greater than a degree of overload of the second core network element, the first access network device may determine that the second core network element serves the terminal device.

For another example, the core network load information includes the capacity information of the first core network element and/or the second core network element. Assuming that the first access network device determines, based on the capacity information, that a remaining capacity of the first core network element is greater than a remaining capacity of the second core network element, the first access network device may determine that the first core network element serves the terminal device.

For another example, the core network load information includes the quantity of terminal devices served by the first core network element by using the second access network device and/or the quantity of terminal devices served by the second core network element by using the second access network device. Assuming that the first access network device determines, based on the core network load information, that a quantity of terminal devices or RRC connections that are allowed by the second access network device to access the first core network element is greater than a quantity of terminal devices or RRC connections that are allowed by the second access network device to access the second core network element, the first access network device may determine that the first core network element serves the terminal device.

For another example, the core network load information includes the resource utilization of the first core network element and/or the second core network element. Assuming that the first access network device determines, based on the core network load information, that resource utilization of the first core network element is greater than resource utilization of the second core network element, the first access network device may determine that the second core network element serves the terminal device.

In this embodiment of the present invention, the core network element may also be referred to as a core network device. Each core network element may be an independent device, and functions of a plurality of core network elements may also be implemented by using one device.

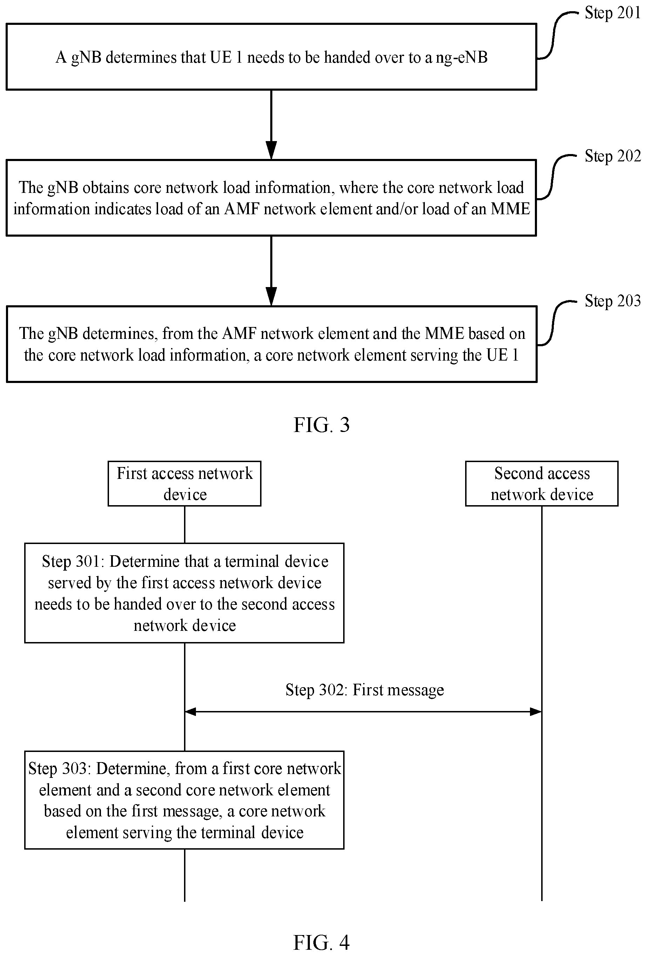

Based on the network architecture shown in FIG. 1, an example in which the first access network device is the gNB shown in FIG. 1, the second access network device is the ng-eNB shown in FIG. 1, the first core network element is an AMF (not shown in FIG. 1), the second core network element is an MME (not shown in FIG. 1), and a terminal device that needs to be handed over from the first access network device to the second access network device is the UE 1 is used below to describe the communication method provided in this application. FIG. 3 is a flowchart of implementation of another communication method according to an embodiment of this application. As shown in FIG. 3, the method includes the following steps.

Step 201: The gNB determines that the UE 1 needs to be handed over to the ng-eNB.

In the example, the ng-eNB is a base station that accesses both the AMF and the MME.

Step 202: The gNB obtains core network load information, where the core network load information indicates load of the AMF and/or load of the MME. For details about how the gNB obtains the core network load information, refer to related descriptions of how the first access network device obtains the core network load information in FIG. 2. Details are not described herein again. For example, the gNB may receive the core network load information from the ng-eNB. For another example, if the ng-eNB and the gNB access a same AMF, the gNB may further receive the core network load information from the AMF.

For descriptions of the core network load information, refer to related descriptions of step 101 in FIG. 2. Details are not described herein again.

An example in which the gNB receives the core network load information from the ng-eNB is used below to describe a possible format of an information element that carries the core network load information.

Table 11 shows a first possible format of an information element according to this embodiment of this application. The information element may include a gNB identifier, a first list, an overload status, and a core network element type. The gNB identifier is used to uniquely identify the gNB. For example, the gNB identifier may be an identifier of a cell of the gNB. The identifier of the cell may include, for example, a physical cell identifier (physical cell identification, PCI) or a cell global identifier (cell global identifier, CGI). This is not limited in this application. The first list may include types and overload statuses of the first core network element and the second core network element.

**Table 11**

| | |
|---|---|
| Information element (information element, IE) or group name (group name) | Information element type (IE type) and reference (reference) |
| gNB identifier (gNB ID) | Used to identify a gNB |
| First list (overload indication list) | May include types and overload statuses of the first core network element and the second core network element |
| Overload status (overload status) | ENUMERATED (overload (overload), not overload (not overload)) |
| Core network element type (CN type) | ENUMERATED (AMF, MME) |

Table 12 shows a second possible format of an information element according to this embodiment of this application. The information element may include a gNB identifier, an overload indication, and a core network element type. The overload indication may be used to indicate that the first core network element or the second core network element is overloaded or not overloaded.

**Table 12**

| | |
|---|---|
| Information element (information element, IE) or | Information element type (IE type) and reference |
| group name (group name) | (reference) |
| gNB identifier (gNB ID) | Used to identify a gNB |
| Overload indication (overload indication) | Used to indicate overloaded or not overloaded |
| Core network element type (CN type) | ENUMERATED (AMF, MME) |

Table 13 shows a third possible format of an information element according to this embodiment of this application. The information element may include a gNB identifier, a second list, a capacity, and a core network element type. The second list may include types and capacities of the first core network element and the second core network element.

**Table 13**

| | |
|---|---|
| Information element (information element, IE) or group name (group name) | Information element type (IE type) and reference (reference) |
| gNB identifier (gNB ID) | Used to identify a gNB |
| Second list (overload indication list) | May include types and capacities of the first core network element and the second core network element |
| Capacity (capacity) | INTEGER (0-255) |
| Core network element type (CN type) | ENUMERATED (AMF, MME) |

Table 14 shows a fourth possible format of an information element according to this embodiment of this application. The information element may include a gNB identifier, a capacity indication, and a core network element type. The capacity indication may be used to indicate a size relationship between a capacity of the first core network element and a capacity of the second core network element.

**Table 14**

| | |
|---|---|
| Information element (information element, IE) or group name (group name) | Information element type (IE type) and reference (reference) |
| gNB identifier (gNB ID) | Used to identify a gNB |
| Capacity indication (capacity indication) | Used to indicate that a capacity of the first core network element is greater than a capacity of the second core network element |
| Core network element type (CN type) | ENUMERATED (AMF, MME) |

Step 203: The gNB determines, from the AMF and the MME based on the core network load information, a core network element serving the UE 1.

For example, if the ng-eNB sends the core network load information to the gNB in the format of the information element shown in Table 11, and the gNB determines, based on the core network load information, that the AMF is overloaded and the MME is not overloaded, the gNB may determine that the MME serves the terminal device.

For another example, if the ng-eNB sends the core network load information to the gNB in the format of the information element shown in Table 13, and the gNB determines, based on the capacity information, that a remaining capacity of the AMF is greater than a remaining capacity of the MME, the gNB may determine that the AMF serves the terminal device.

According to the foregoing method, the gNB may determine, based on the core network load information, whether the AMF or the MME serves the UE 1. In this way, the load of the AMF and the load of the MME can be balanced.

An embodiment of this application further provides another communication method. According to the method, the eNB/gNB may determine, based on a mobility parameter that is set for a core network element, whether the EPC or the 5G core network serves the terminal device.

FIG. 4 is a flowchart of implementation of another communication method according to an embodiment of this application. As shown in FIG. 4, the method includes the following steps.

Step 301: A first access network device determines that a terminal device served by the first access network device needs to be handed over to a second access network device. In this embodiment, meanings of the first access network device and the second access network device are the same as those in FIG. 2, and details are not described again.

Step 302: The first access network device obtains a first message from the second access network device, where the first message includes a type of a first core network element and a first mobility parameter corresponding to the first core network element, and a type of a second core network element and a second mobility parameter corresponding to the second core network element.

In this embodiment of this application, the first message may be an existing message, for example, may be a mobility parameter change request (mobility change request) message. Certainly, the first message may alternatively be a new message.

In this embodiment of this application, the mobility parameter includes a parameter related to a measurement event, for example, a cell individual offset (cell individual offset, CIO) in an A3 event. This is not limited in this application.

In a possible implementation, the first mobility parameter may be determined based on a load status of the first core network element. For example, the first mobility parameter may be determined based on at least one of overload information and capacity information of the first core network element, a quantity of terminal devices served by the first core network element by using the second access network device, or resource utilization and/or a quantity of terminal devices of the first core network element. Similarly, the second mobility parameter may be determined based on a load status of the second core network element. For example, the second mobility parameter may be determined based on at least one of overload information and capacity information of the second core network element, a quantity of terminal devices served by the second core network element by using the second access network device, or resource utilization and/or a quantity of terminal devices of the second core network element.

It should be noted that, in this embodiment of this application, the first mobility parameter and the second mobility parameter may be one parameter, or may be a plurality of parameters. When there are a plurality of parameters, the plurality of parameters may be parameters of a same type, or may be parameters of different types. This is not limited in this application.

Step 303: The first access network device determines, from the first core network element and the second core network element based on the first message, a core network element serving the terminal device.

In a possible implementation, the first access network device may determine the core network element serving the terminal device by using the following method.

Step 3031: After receiving the first message, the first access network device configures the first mobility parameter and the second mobility parameter for the terminal device.

Step 3032: The terminal device separately determines, based on the first mobility parameter and the second mobility parameter, a handover event that meets the first mobility parameter or the second mobility parameter, so that the terminal device may report, to the first access network device, the handover event that meets the first mobility parameter or the second mobility parameter.

Step 3033: The first access network device receives the handover event from the terminal device, where the handover event corresponds to the first mobility parameter or corresponds to the second mobility parameter.

Step 3034: The first access network device enables the terminal device to access the first core network element or the second core network element based on the handover event. Specifically, when the handover event corresponds to the first mobility parameter, the terminal device is accessed to the first core network element. Alternatively, when the handover event corresponds to the second mobility parameter, the terminal device is accessed to the second core network element.

Based on the foregoing possible implementation, for example, the handover event is the A3 event. It is assumed that the terminal device may determine, based on the first mobility parameter and the second mobility parameter, that the terminal device uses the first mobility parameter to meet an entry condition of the A3 event. This may be understood as that the terminal device determines the A3 event that meets the first mobility parameter. In this case, the terminal device triggers reporting of the A3 event corresponding to the first mobility parameter. After receiving the A3 event corresponding to the first mobility parameter, the first access device may determine to enable the terminal device to access the first core network element corresponding to the first mobility parameter.

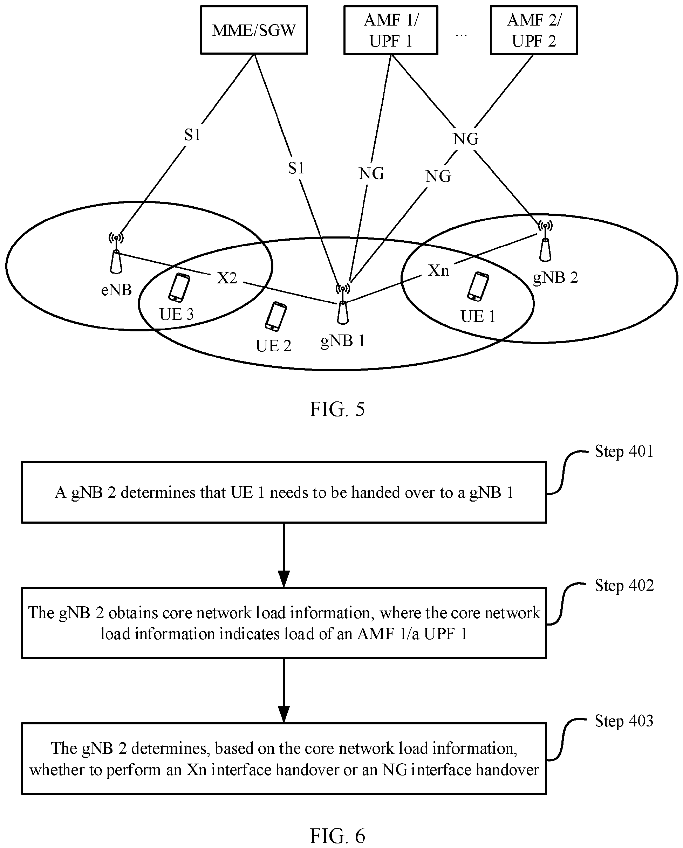

FIG. 5 is a schematic diagram of another network architecture to which an embodiment of this application may be applied. As shown in FIG. 5, the network architecture includes an LTE system and an NR system, and an EPC and a 5G core network coexist. A base station eNB in the LTE system accesses a core network element MME/SGW in the LTE system through an S 1 interface. A base station gNB 1 in the NR system accesses a plurality of core network elements such as an AMF 1/a UPF 1 and an AMF 2/a UPF 2 in the NR system through an NG interface, and a base station gNB 2 in the NR system accesses the core network element AMF 1/UPF 1 in the NR system through the NG interface. It should be noted that, although the gNB 1 in FIG. 5 simultaneously accesses a plurality of core network elements, only one core network element currently serves the gNB 1. It should be understood that the network architecture shown in FIG. 5 is described by using only an example in which three base stations and three UEs are included. However, this embodiment of this application is not limited thereto. For example, the network architecture may further include more base stations. Similarly, the network architecture may also include more UEs, and may further include another device.

In the network architecture shown in FIG. 5, when UE 1 covered by the gNB 2 needs to be handed over to the gNB 1, the gNB 2 directly performs Xn interface handover by using a method in a conventional technology. A solution in the conventional technology causes some problems. For example, if load of the core network element AMF 1/UPF 1 that currently serves the gNB 2 is excessively heavy, the load of the AMF 1/UPF 1 is increased, or even a handover failure is caused.

Based on the foregoing existing problem, an embodiment of this application provides still another communication method. According to the method, the gNB 2 may determine, based on core network load information, how to hand over the UE 1. The communication method is described below by using an example based on the network architecture shown in FIG. 5.

FIG. 6 is a flowchart of implementation of still another communication method according to an embodiment of this application. As shown in FIG. 6, the method includes the following steps.

Step 401: The gNB 2 determines that the UE 1 needs to be handed over to the gNB 1. In this example, it is assumed that the gNB 1 is currently served by the AMF 1/UPF 1.

Step 402: The gNB 2 obtains core network load information, where the core network load information indicates load of the AMF 1/UPF 1. How the gNB 2 obtains the core network load information is not limited in this embodiment. For example, the gNB 2 may receive the core network load information from the gNB 1. For another example, the gNB 2 may further receive the core network load information from the AMF 1/UPF 1. For descriptions of the core network load information, refer to related descriptions of step 101 in FIG. 2. Details are not described herein again.

Step 403: The gNB 2 determines, based on the core network load information, whether to perform an Xn interface handover or an NG interface handover.

It should be noted that the Xn interface handover is a handover in which the AMF 1/UPF 1 still serves the UE 1. In this case, the gNB 1 still accesses the AMF 1/UPF 1. The NG interface handover is a handover in which a core network element other than the AMF 1/UPF 1 serves the UE 1. In this case, the gNB 1 needs to be handed over to the core network element other than the AMF 1/UPF 1. For example, if the gNB 2 determines, based on the core network load information, that the load of the AMF 1/UPF 1 is greater than a preset value, the gNB 2 may determine that a core network element (for example, the AMF 2/UPF 2) other than the AMF 1/UPF 1 serves the UE 1. In other words, the gNB 2 determines to change a core network. In this case, the gNB 2 performs the NG interface handover, to change the core network element.

Currently, in the NR system, energy saving of a base station may be implemented by deactivating a cell (or a base station). An existing base station has a coarse energy-saving granularity. Once a cell is deactivated, a base station to which the cell belongs cannot provide any service.

Based on the foregoing existing problem, an embodiment of this application provides still another communication method. According to the method, energy saving of a base station can be implemented by deactivating a carrier. In this way, when some carriers supported by the base station are deactivated, some other carriers that are not deactivated and that are supported by the base station can still be used, and the base station can further serve a terminal device while implementing energy saving.

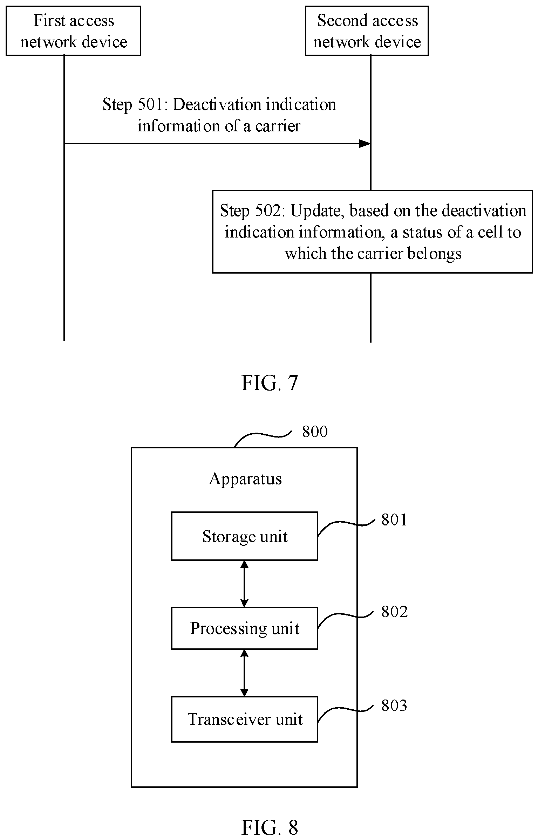

FIG. 7 is a flowchart of implementation of still another communication method according to an embodiment of this application. The method may be applied to the network architecture shown in FIG. 1 or FIG. 5. Referring to FIG. 7, the method includes the following steps.

Step 501: A first access network device sends deactivation indication information of a carrier to a second access network device, and the second access network device receives the deactivation indication information of the carrier from the first access network device, where the deactivation indication information is used to indicate that the first access network device has deactivated the carrier. In this embodiment of this application, the first access network device may send the deactivation indication information by using an existing message or a new message. For example, the first access network device may send the deactivation indication information by using an existing gNB configuration update (gNB configuration update) message of an Xn interface, or may send the deactivation indication information by using a newly defined Xn interface message.

In this embodiment, the carrier may include an uplink carrier and/or a downlink carrier. The uplink carrier may include a normal carrier (normal UL) and/or a supplementary carrier (SUL). The downlink carrier may include a downlink carrier for carrier aggregation, a downlink carrier of a beam, and the like. This is not limited in the present invention.

Optionally, the deactivation indication information may include an identifier of a cell to which the carrier belongs and/or an identifier of the carrier. The identifier of the cell may be, for example, a PCI or a CGI.

Step 502: The second access network device updates, based on the deactivation indication information, a status of the cell to which the carrier belongs. For example, the second access network device may update the status of the carrier in the cell based on the deactivation indication information. Specifically, the status of the carrier may be updated from an activated state to a deactivated state.

In a possible implementation, after step 502 is performed, the second access network device may further send an activation request to the first access network device, and the first access network device may further receive the activation request from the second access network device, where the activation request is used to request to activate the carrier. The activation request may include activation indication information, and the activation indication information is used to indicate to activate the carrier.

Optionally, the activation indication information may include the identifier of the cell to which the carrier belongs and/or the identifier of the carrier.

Based on the foregoing possible implementation, in a possible implementation, after receiving the activation request from the second access network device, the first access network device may further send an activation response to the second access network device, and the second access network device receives the activation response from the first access network device, where the activation response is used to indicate that the carrier has been activated.

Optionally, the activation response may include the identifier of the cell to which the carrier belongs and/or the identifier of the carrier.

If the communication method provided in FIG. 7 is applied to a CU-DU architecture, after an uplink/downlink carrier of a cell served by the DU is deactivated, the deactivation indication information may be sent to the CU, so that the CU can update a status of the cell. Further, after the DU sends the deactivation indication information of the carrier to the CU, the CU may further send an uplink/downlink carrier activation request to the DU, and the DU may further send an uplink/downlink carrier activation response to the CU.

Optionally, the deactivation indication information and the activation indication information may be carried in an existing F1AP message or a newly defined message for sending.

The foregoing mainly describes the solutions provided in this application from a perspective of interaction between network elements. It may be understood that to implement the foregoing functions, the network elements include corresponding hardware structures and/or software modules for performing the functions. A person skilled in the art should easily be aware that, in combination with the example units and algorithm steps described in the embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

When an integrated unit is used, FIG. 8 is a possible example block diagram of an apparatus according to an embodiment of the present invention. The apparatus 800 may exist in a form of software, or may be a first access network device or a second access network device, or may be a chip in the first access network device or a chip in the second access network device. The apparatus 800 includes a processing unit 802 and a transceiver unit 803. The processing unit 802 is configured to control and manage an action of the apparatus 800. For example, when the apparatus 800 is a first access network device, the processing unit 802 is configured to perform a technical process such as determining, from the first core network element and the second core network element based on the core network load information, a core network element serving a terminal device. When the apparatus 800 is a second access network device, the processing unit 802 is configured to perform a technical process such as determining core network load information. The transceiver unit 803 is configured to support the apparatus 800 in communicating with another network entity. When the apparatus 800 is a first access network device, the transceiver unit 803 may be configured to support the apparatus 800 in performing a technical process such as obtaining core network load information. When the apparatus 800 is a second access network device, the transceiver unit 803 may be configured to support the apparatus 800 in performing a technical process such as sending the core network load information to a first access network device. The apparatus 800 may further include a storage unit 801, configured to store program code and data that are of the apparatus 800.

The processing unit 802 may be a processor or a controller, for example, a general-purpose central processing unit (central processing unit, CPU), a general-purpose processor, digital signal processing (digital signal processing, DSP), an application-specific integrated circuit (application specific integrated circuits, ASIC), a field programmable gate array (field programmable gate array, FPGA), another programmable logic device, a transistor logic device, a hardware component, or any combination thereof. The processing unit 802 may implement or execute various examples of logical blocks, modules, and circuits described with reference to content disclosed in the present invention. The processor may alternatively be a combination of processors implementing a computing function, for example, a combination of one or more microprocessors or a combination of a DSP and a microprocessor. The transceiver unit 803 may be a communication interface, a transceiver, a transceiver circuit, or the like. The storage unit 801 may be a memory.

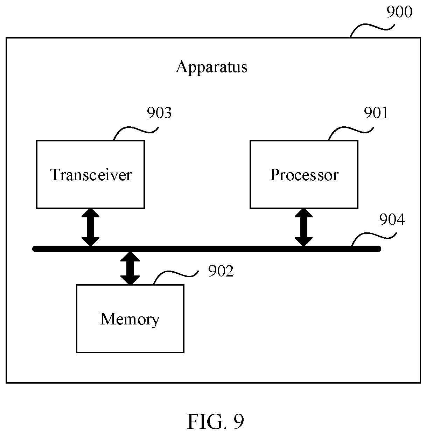

When the processing unit 802 is a processor, the transceiver unit 803 is a transceiver, and the storage unit 801 is a memory, the apparatus 800 in this embodiment of the present invention may be an apparatus shown in FIG. 9.

FIG. 9 is a possible schematic diagram of a logical structure of the apparatus in the foregoing embodiment according to an embodiment of this application. As shown in FIG. 9, the apparatus 900 may include at least one processor 901. In this embodiment of this application, the processor 901 is configured to control and manage an action of the apparatus. Optionally, the apparatus may further include a memory 902 and a transceiver 903. The processor 901, the transceiver 903, and the memory 902 may be connected to each other, or may be connected to each other by using a bus 904. The memory 902 is configured to store code and data that are of the apparatus. The transceiver 903 is configured to support the apparatus in performing communication.

The following describes each component of the apparatus in detail.

The processor 901 is a control center of the apparatus, and may be one processor or may be a collective term of a plurality of processing elements. For example, the processor 901 is a CPU, or may be implemented as an ASIC, or one or more integrated circuits configured to implement this embodiment of the present invention, for example, one or more DSPs, or one or more FPGAs.

The processor 901 may run or execute a software program stored in the memory 902 and invoke the data stored in the memory 902, to perform various functions of the apparatus 900.

The memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory 902 is not limited thereto. The memory 902 may exist independently, or may be connected to the processor 901 by using the communication bus 904. Alternatively, the memory 902 may be integrated with the processor 901.

The transceiver 903 uses any apparatus such as a transceiver, and is configured to communicate with another node, for example, a first network element. The transceiver 903 may further be configured to communicate with a communication network, such as the Ethernet, a radio access network (radio access network, RAN), or a wireless local area network (Wireless Local Area Networks, WLAN). The transceiver 1203 may include a receiving unit for implementing a receiving function and a sending unit for implementing a sending function.

The communication bus 904 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

A structure of the device shown in FIG. 9 does not constitute a limitation on the apparatus. The apparatus may include more or fewer components than those shown in the figure, or combine some components, or have different component arrangements.

When the apparatus shown in FIG. 9 is a first access network device or a chip in the first access network device, the transceiver 903 may be configured to obtain core network load information, where the core network load information indicates load of a first core network element and/or load of a second core network element. The processor 901 may be configured to determine, from the first core network element and the second core network element based on the core network load information, a core network element serving a terminal device.

In a possible implementation, the transceiver 903 is specifically configured to:
receive the core network load information from a second access network device, where the second access network device is an access network device that accesses the first core network element and the second core network element; or
receive the core network load information from the first core network element or the second core network element.

In a possible implementation, the core network load information includes one or more of the following:
overload information of the first core network element and/or the second core network element;
capacity information of the first core network element and/or the second core network element;
a quantity of terminal devices served by the first core network element by using the second access network device and/or a quantity of terminal devices served by the second core network element by using the second access network device; or
resource utilization and/or a quantity of terminal devices of the first core network element and/or the second core network element.

In a possible implementation, the overload information includes a first indication and a type of the first core network element, where the first indication and the type of the first core network element indicate whether the first core network element is overloaded; and includes a second indication and a type of the second core network element, where the second indication and the type of the second core network element indicate whether the second core network element is overloaded; or
the overload information includes a third indication and/or a type of the first core network element, where the overload information indicates whether the first core network element is overloaded.

In a possible implementation, the capacity information includes a capacity of the first core network element and the type of the first core network element, and includes a capacity of the second core network element and the type of the second core network element; or
the capacity information indicates a capacity relationship between the first core network element and the second core network element.

When the apparatus shown in FIG. 9 is a second access network device or a chip in the second access network device, the processor 901 may be configured to determine core network load information, where the core network load information indicates load of a first core network element and/or load of a second core network element, and the communication apparatus is an access network device that accesses the first core network element and the second core network element. The transceiver 903 may be configured to send the core network load information to a first access network device.

In a possible implementation, the core network load information includes one or more of the following:
overload information of the first core network element and/or the second core network element;
capacity information of the first core network element and/or the second core network element;
a quantity of terminal devices served by the first core network element by using the communication apparatus and/or a quantity of terminal devices served by the second core network element by using the communication apparatus; or
resource utilization and/or a quantity of terminal devices of the first core network element and/or the second core network element.

In a possible implementation, the overload information includes a first indication and a type of the first core network element, where the first indication and the type of the first core network element indicate whether the first core network element is overloaded; and includes a second indication and a type of the second core network element, where the second indication and the type of the second core network element indicate whether the second core network element is overloaded; or
the overload information includes a third indication and/or a type of the first core network element, where the overload information indicates whether the first core network element is overloaded.

In a possible implementation, the capacity information includes a capacity of the first core network element and the type of the first core network element, and includes a capacity of the second core network element and the type of the second core network element; or
the capacity information indicates a capacity relationship between the first core network element and the second core network element.

Based on a same concept as the foregoing method embodiment, an embodiment of this application further provides a computer-readable storage medium, storing some instructions. When these instructions are invoked and executed by a computer, the computer may be enabled to complete the method in any one of the foregoing method embodiment or the possible designs of the foregoing method embodiment. In this embodiment of this application, the computer-readable storage medium is not limited. For example, the computer-readable storage medium may be a random access memory (random-access memory, RAM), a read-only memory (read-only memory, ROM), or the like.

Based on a same concept as the foregoing method embodiment, this application further provides a computer program product. When being invoked and executed by a computer, the computer program product can complete the method in any one of the foregoing method embodiment and the possible designs of the foregoing method embodiment.

Based on a same concept as the foregoing method embodiment, this application further provides a chip. The chip is coupled to a transceiver, and is configured to complete the method in any one of the foregoing method embodiment and the possible implementations of the foregoing method embodiment. "Coupling" means that two components are directly or indirectly combined with each other. The combination may be fixed or movable, and the combination may allow communication of a fluid, electricity, an electrical signal, or another type of signal between the two parts.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The various illustrative logical units and circuits described in the embodiments of this application may implement or operate the described functions through a general-purpose processor, a digital signal processor, an application-specific integrated circuit (ASIC), a field programmable gate array (FPGA), another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Optionally, the storage medium may further be integrated into a processor. The processor and the storage medium may be arranged in the ASIC, and the ASIC may be arranged in a terminal device. Optionally, the processor and the storage medium may alternatively be arranged in different components of the terminal device.

The computer program instructions may alternatively be loaded onto a computer or another programmable data processing device, so that a series of operations and steps are performed on the computer or another programmable device, to generate computer-implemented processing. Therefore, the instructions executed on the computer or the another programmable device provide steps for implementing a specified function in one or more procedures in the flowcharts and/or in one or more blocks in the block diagrams.

Although the present invention is described with reference to specific features and the embodiments thereof, it is clear that various modifications and combinations may be made. Correspondingly, the specification and accompanying drawings are merely example descriptions of the present invention defined by the appended claims, and are considered as any of or all modifications, variations, combinations that cover the scope of the present invention. It is clear that a person skilled in the art can make various modifications and variations to the present invention. The present invention is intended to cover these modifications and variations provided that these modifications and variations fall within the scope of protection defined by the following claims.

## Claims

1. A communication method, comprising:
obtaining (101), by a first access network device, core network load information, wherein the core network load information indicates load of a first core network element and/or load of a second core network element; and
determining (102), by the first access network device based on the core network load information, a core network element serving a terminal device, wherein the core network element is one of the first core network element and the second core network element,
wherein the core network load information comprises one or more of the following:
- overload information of the first core network element and/or the second core network element, wherein the overload information comprises a first indication indicative of an overload level of the first core network element and a type of the first core network element, and a second indication indicative of an overload level of the second core network element and a type of the second core network element; or
- capacity information of the first core network element and/or the second core network element, wherein the capacity information indicates a capacity relationship between the first core network element and the second core network element;
wherein the first access network device accesses the first core network element or the second core network element or a core network element other than the first or second core network element, and wherein the first access network device has determined that the terminal needs to handover to a second access network device, which accesses both the first core network element and the second core network element and wherein determining the core network element serving the terminal comprises determining the core network element serving the terminal after the handover.

2. The method according to claim 1, wherein the obtaining, by a first access network device, core network load information comprises:
receiving, by the first access network device, the core network load information from the second access network device.

3. The method according to claim 1 or 2, wherein the core network load information further comprises one or more of the following:
a quantity of terminal devices served by the first core network element by using the second access network device and/or a quantity of terminal devices served by the second core network element by using the second access network device; or
resource utilization and/or a quantity of terminal devices of the first core network element and/or the second core network element.

4. The method according to claim 1, wherein the obtaining, by a first access network device, core network load information comprises:
receiving, by the first access network device, the core network load information from the core network element it accesses; wherein the core network it accesses is one of the first or second core network element; and wherein the load information comprises information only of the core network element which the first access network device accesses.

5. A communication apparatus, comprising:
a transceiver unit (803), configured to obtain core network load information, wherein the core network load information indicates load of a first core network element and/or load of a second core network element; and
a processing unit (802), configured to determine, based on the core network load information, a core network element serving a terminal device; wherein the core network element is one of the first core network element and the second core network element,
wherein the core network load information comprises one or more of the following:
- overload information of the first core network element and/or the second core network element, wherein the overload information comprises a first indication indicative of an overload level of the first core network element and a type of the first core network element, and a second indication indicative of an overload level of the second core network element and a type of the second core network element; or
- capacity information of the first core network element and/or the second core network element, wherein the capacity information indicates a capacity relationship between the first core network element and the second core network element; and
wherein the communication apparatus is a first access network device, configured to access either the first core network element or the second core network element or a core network element other than the first or second core network element; and wherein the first access network device is configured to determine that the terminal needs to handover to a second access network device, configured to access both the first core network element and the second core network element and wherein determining the core network element serving the terminal comprises determining the core network element serving the terminal after the handover.

6. The apparatus according to claim 5, wherein the transceiver unit (803) configured to obtain core network load information, comprises a transceiver configured to receive the core network load information from the second access network device.

7. The apparatus according to claim 5 or 6, wherein the core network load information comprises one or more of the following:
a quantity of terminal devices served by the first core network element by using the second access network device and/or a quantity of terminal devices served by the second core network element by using the second access network device; or
resource utilization and/or a quantity of terminal devices of the first core network element and/or the second core network element.

8. The apparatus according to claim 5, wherein the transceiver unit (803) configured to obtain core network load information, comprises a transceiver configured to
receive the core network load information from the core network element it accesses; wherein the core network it accesses is one of the first or second core network element; and wherein the load information comprises information only of the core network element which the first access network device accesses.

9. A communication apparatus, comprising:
a processing unit (901), configured to determine core network load information, wherein the core network load information indicates load of a first core network element and/or load of a second core network element, and the communication apparatus is an access network device that accesses the first core network element and the second core network element; and
a transceiver unit (903), configured to send the core network load information to a first access network device,
wherein the core network load information comprises one or more of the following:
- overload information of the first core network element and/or the second core network element, wherein the overload information comprises a first indication indicative of an overload level of the first core network element and a type of the first core network element, and a second indication indicative of an overload level of the second core network element and a type of the second core network element; or
- capacity information of the first core network element and/or the second core network element, wherein the capacity information indicates a capacity relationship between the first core network element and the second core network element; wherein the communication apparatus is a second access network device configured to access both the first core network element and the second core network element; and wherein the second access network device is determined by the first access network device as an access network node that the terminal needs to handover to.

10. The apparatus according to claim 9, wherein the core network load information further comprises one or more of the following:
a quantity of terminal devices served by the first core network element by using the communication apparatus and/or a quantity of terminal devices served by the second core network element by using the communication apparatus; or
resource utilization and/or a quantity of terminal devices of the first core network element and/or the second core network element.

11. A computer program product comprising instructions which, when executed by a computer, cause the computer to carry out the method of any one of claims 1 to 4.

## Patentansprüche

1. Kommunikationsverfahren, umfassend:
Erlangen (101), durch ein erstes Zugangsnetzgerät, von Kernnetzlastinformationen, wobei die Kernnetzlastinformationen eine Last eines ersten Kernnetzelements und/oder eine Last eines zweiten Kernnetzelements anzeigen; und
Bestimmen (102), durch das erste Zugangsnetzgerät basierend auf den Kernnetzlastinformationen, eines Kernnetzelements, das ein Endgerät bedient, wobei das Kernnetzelement eines von dem ersten Kernnetzelement und dem zweiten Kernnetzelement ist,
wobei die Kernnetzlastinformationen eine oder mehrere der Folgenden umfassen:
- Überlastungsinformationen des ersten Kernnetzelements und/oder des zweiten Kernnetzelements, wobei die Überlastungsinformationen eine erste Anzeige, die ein Überlastungsniveau des ersten Kernnetzelements und einen Typus des ersten Kernnetzelements anzeigt, und eine zweite Anzeige, die ein Überlastungsniveau des zweiten Kernnetzelements und einen Typus des zweiten Kernnetzelements anzeigt, umfassen; oder
- Kapazitätsinformationen des ersten Kernnetzelements und/oder des zweiten Kernnetzelements, wobei die Kapazitätsinformationen eine Kapazitätsbeziehung zwischen dem ersten Kernnetzelement und dem zweiten Kernnetzelement anzeigen;
wobei das erste Zugangsnetzgerät auf das erste Kernnetzelement oder das zweite Kernnetzelement oder ein anderes Kernnetzelement als das erste oder das zweite Kernnetzelement zugreift und wobei das erste Zugangsnetzgerät bestimmt hat, dass das Endgerät an ein zweites Zugangsnetzgerät übergeben muss, das sowohl auf das erste Kernnetzelement als auch auf das zweite Kernnetzelement zugreift, und wobei das Bestimmen des Kernnetzelements, das das Endgerät bedient, Bestimmen des Kernnetzelements, das das Endgerät nach dem Übergeben bedient, umfasst.

2. Verfahren nach Anspruch 1, wobei das Erlangen, durch ein erstes Zugangsnetzgerät, von Kernnetzlastinformationen Folgendes umfasst:
Empfangen, durch das erste Zugangsnetzgerät, der Kernnetzlastinformationen von dem zweiten Zugangsnetzgerät.

3. Verfahren nach Anspruch 1 oder 2, wobei die Kernnetzlastinformationen ferner eine oder mehrere der Folgenden umfassen:
eine Anzahl von Endgeräten, die durch das erste Kernnetzelement unter Verwendung des zweiten Zugangsnetzgeräts bedient werden, und/oder eine Anzahl von Endgeräten, die durch das zweite Kernnetzelement unter Verwendung des zweiten Zugangsnetzgeräts bedient werden; oder
eine Ressourcenauslastung und/oder eine Anzahl von Endgeräten des ersten Kernnetzelements und/oder des zweiten Kernnetzelements.

4. Verfahren nach Anspruch 1, wobei das Erlangen, durch ein erstes Zugangsnetzgerät, von Kernnetzlastinformationen Folgendes umfasst:
Empfangen, durch das erste Zugangsnetzgerät, der Kernnetzlastinformationen von dem Kernnetzelement, auf das es zugreift; wobei das Kernnetz, auf das es zugreift, eines von dem ersten oder dem zweiten Kernnetzelement ist;
und wobei die Lastinformationen nur Informationen des Kernnetzelements umfassen, auf das das erste Zugangsnetzgerät zugreift.

5. Kommunikationsvorrichtung, umfassend:
eine Sendeempfängereinheit (803), die dazu konfiguriert ist, Kernnetzlastinformationen zu erlangen, wobei die Kernnetzlastinformationen eine Last eines ersten Kernnetzelements und/oder eine Last eines zweiten Kernnetzelements anzeigen; und eine Verarbeitungseinheit (802), die dazu konfiguriert ist, basierend auf den Kernnetzlastinformationen ein Kernnetzelement zu bestimmen, das ein Endgerät bedient; wobei das Kernnetzelement eines von dem ersten Kernnetzelement und dem zweiten Kernnetzelement ist,
wobei die Kernnetzlastinformationen eine oder mehrere der Folgenden umfassen:
- Überlastungsinformationen des ersten Kernnetzelements und/oder des zweiten Kernnetzelements, wobei die Überlastungsinformationen eine erste Anzeige, die ein Überlastungsniveau des ersten Kernnetzelements und einen Typus des ersten Kernnetzelements anzeigt, und eine zweite Anzeige, die ein Überlastungsniveau des zweiten Kernnetzelements und einen Typus des zweiten Kernnetzelements anzeigt, umfassen; oder
- Kapazitätsinformationen des ersten Kernnetzelements und/oder des zweiten Kernnetzelements, wobei die Kapazitätsinformationen eine Kapazitätsbeziehung zwischen dem ersten Kernnetzelement und dem zweiten Kernnetzelement anzeigen; und
wobei die Kommunikationsvorrichtung ein erstes Zugangsnetzgerät ist, das dazu konfiguriert ist, entweder auf das erste Kernnetzelement oder das zweite Kernnetzelement oder ein anderes Kernnetzelement als das erste oder das zweite Kernnetzelement zuzugreifen; und wobei das erste Zugangsnetzgerät dazu konfiguriert ist, zu bestimmen, dass das Endgerät an ein zweites Zugangsnetzgerät übergeben muss, das dazu konfiguriert ist, sowohl auf das erste Kernnetzelement als auch auf das zweite Kernnetzelement zuzugreifen, und wobei das Bestimmen des Kernnetzelements, das das Endgerät bedient, Bestimmen des Kernnetzelements, das das Endgerät nach dem Übergeben bedient, umfasst.

6. Vorrichtung nach Anspruch 5, wobei die Sendeempfängereinheit (803), die dazu konfiguriert ist, Kernnetzlastinformationen zu erlangen, einen Sendeempfänger umfasst, der dazu konfiguriert ist, die Kernnetzlastinformationen von dem zweiten Zugangsnetzgerät zu empfangen.

7. Vorrichtung nach Anspruch 5 oder 6, wobei die Kernnetzlastinformationen eine oder mehrere der Folgenden umfassen:
eine Anzahl von Endgeräten, die durch das erste Kernnetzelement unter Verwendung des zweiten Zugangsnetzgeräts bedient werden, und/oder eine Anzahl von Endgeräten, die durch das zweite Kernnetzelement unter Verwendung des zweiten Zugangsnetzgeräts bedient werden; oder
eine Ressourcenauslastung und/oder eine Anzahl von Endgeräten des ersten Kernnetzelements und/oder des zweiten Kernnetzelements.

8. Vorrichtung nach Anspruch 5, wobei die Sendeempfängereinheit (803), die dazu konfiguriert ist, Kernnetzlastinformationen zu erlangen, einen Sendeempfänger umfasst, der dazu konfiguriert ist, die Kernnetzlastinformationen von dem Kernnetzelement, auf das er zugreift, zu empfangen; wobei das Kernnetz, auf das er zugreift, eines von dem ersten oder dem zweiten Kernnetzelement ist; und wobei die Lastinformationen nur Informationen des Kernnetzelements umfassen, auf das das erste Zugangsnetzgerät zugreift.

9. Kommunikationsvorrichtung, umfassend:
eine Verarbeitungseinheit (901), die dazu konfiguriert ist, Kernnetzlastinformationen zu bestimmen, wobei die Kernnetzlastinformationen eine Last eines ersten Kernnetzelements und/oder eine Last eines zweiten Kernnetzelements anzeigen und die Kommunikationsvorrichtung ein Zugangsnetzgerät ist, das auf das erste Kernnetzelement und das zweite Kernnetzelement zugreift; und
eine Sendeempfängereinheit (903), die dazu konfiguriert ist, die Kernnetzlastinformationen an ein erstes Zugangsnetzgerät zu senden,
wobei die Kernnetzlastinformationen eine oder mehrere der Folgenden umfassen:
- Überlastungsinformationen des ersten Kernnetzelements und/oder des zweiten Kernnetzelements, wobei die Überlastungsinformationen eine erste Anzeige, die ein Überlastungsniveau des ersten Kernnetzelements und einen Typus des ersten Kernnetzelements anzeigt, und eine zweite Anzeige, die ein Überlastungsniveau des zweiten Kernnetzelements und einen Typus des zweiten Kernnetzelements anzeigt, umfassen; oder
- Kapazitätsinformationen des ersten Kernnetzelements und/oder des zweiten Kernnetzelements, wobei die Kapazitätsinformationen eine Kapazitätsbeziehung zwischen dem ersten Kernnetzelement und dem zweiten Kernnetzelement anzeigen; wobei die Kommunikationsvorrichtung ein zweites Zugangsnetzgerät ist, das dazu konfiguriert ist, sowohl auf das erste Kernnetzelement als auch auf das zweite Kernnetzelement zuzugreifen; und wobei das zweite Zugangsnetzgerät durch das erste Zugangsnetzgerät als ein Zugangsnetzknoten bestimmt wird, an den das Endgerät übergeben muss.

10. Vorrichtung nach Anspruch 9, wobei die Kernnetzlastinformationen ferner eine oder mehrere der Folgenden umfassen:
eine Anzahl von Endgeräten, die durch das erste Kernnetzelement unter Verwendung der Kommunikationsvorrichtung bedient werden, und/oder eine Anzahl von Endgeräten, die durch das zweite Kernnetzelement unter Verwendung der Kommunikationsvorrichtung bedient werden; oder
eine Ressourcenauslastung und/oder eine Anzahl von Endgeräten des ersten Kernnetzelements und/oder des zweiten Kernnetzelements.

11. Computerprogrammprodukt, umfassend Anweisungen, die, wenn sie durch einen Computer ausgeführt werden, den Computer dazu veranlassen, das Verfahren nach einem der Ansprüche 1 bis 4 durchzuführen.

## Revendications

1. Procédé de communication, comprenant :
l'obtention (101), par un premier dispositif de réseau d'accès, d'informations de charge de réseau central, dans lequel les informations de charge de réseau central indiquent la charge d'un premier élément de réseau central et/ou la charge d'un second élément de réseau central ; et
la détermination (102), par le premier dispositif de réseau d'accès sur la base des informations de charge de réseau central, d'un élément de réseau central desservant un dispositif terminal, dans lequel l'élément de réseau central est l'un du premier élément de réseau central et du second élément de réseau central,
dans lequel les informations de charge de réseau central comprennent un ou plusieurs des éléments suivants :
- des informations de surcharge du premier élément de réseau central et/ou du second élément de réseau central, dans lequel les informations de surcharge comprennent une première indication indiquant un niveau de surcharge du premier élément de réseau central et un type du premier élément de réseau central, et une seconde indication indiquant un niveau de surcharge du second élément de réseau central et un type du second élément de réseau central ; ou
- des informations de capacité du premier élément de réseau central et/ou du second élément de réseau central, dans lequel les informations de capacité indiquent une relation de capacité entre le premier élément de réseau central et le second élément de réseau central ;
dans lequel le premier dispositif de réseau d'accès accède au premier élément de réseau central ou au second élément de réseau central ou à un élément de réseau central autre que le premier ou le second élément de réseau central, et dans lequel le premier dispositif de réseau d'accès a déterminé que le terminal doit effectuer un transfert vers un second dispositif de réseau d'accès, qui accède à la fois au premier élément de réseau central et au second élément de réseau central et dans lequel la détermination de l'élément de réseau central desservant le terminal comprend la détermination de l'élément de réseau central desservant le terminal après le transfert.

2. Procédé selon la revendication 1, dans lequel l'obtention, par un premier dispositif de réseau d'accès, d'informations de charge du réseau central comprend :
la réception, par le premier dispositif de réseau d'accès, des informations de charge de réseau central en provenance du second dispositif de réseau d'accès.

3. Procédé selon la revendication 1 ou 2, dans lequel les informations de charge de réseau central comprennent également un ou plusieurs des éléments suivants :
une quantité de dispositifs terminaux desservis par le premier élément de réseau central à l'aide du second dispositif de réseau d'accès et/ou une quantité de dispositifs terminaux desservis par le second élément de réseau central à l'aide du second dispositif de réseau d'accès ; ou
l'utilisation de ressources et/ou d'une quantité de dispositifs terminaux du premier élément de réseau central et/ou du second élément de réseau central.

4. Procédé selon la revendication 1, dans lequel l'obtention, par un premier dispositif de réseau d'accès, d'informations de charge de réseau central comprend :
la réception, par le premier dispositif de réseau d'accès, des informations de charge de réseau central en provenance de l'élément de réseau central auquel il accède ; dans lequel le réseau central auquel il accède est l'un du premier ou second élément de réseau central ;
et dans lequel les informations de charge comprennent uniquement des informations sur l'élément de réseau central auquel accède le premier dispositif de réseau d'accès.

5. Appareil de communication, comprenant :
une unité d'émetteur-récepteur (803), configurée pour obtenir des informations de charge de réseau central, dans lequel les informations de charge de réseau central indiquent la charge d'un premier élément de réseau central et/ou la charge d'un second élément de réseau central ; et
une unité de traitement (802), configurée pour déterminer, sur la base des informations de charge de réseau central, un élément de réseau central desservant un dispositif terminal ; dans lequel l'élément de réseau central est l'un du premier élément de réseau central et du second élément de réseau central,
dans lequel les informations de charge de réseau central comprennent un ou plusieurs des éléments suivants :
- des informations de surcharge du premier élément de réseau central et/ou du second élément de réseau central, dans lequel les informations de surcharge comprennent une première indication indiquant un niveau de surcharge du premier élément de réseau central et un type du premier élément de réseau central, et une seconde indication indiquant un niveau de surcharge du second élément de réseau central et un type du second élément de réseau central ; ou
- des informations de capacité du premier élément de réseau central et/ou du second élément de réseau central, dans lequel les informations de capacité indiquent une relation de capacité entre le premier élément de réseau central et le second élément de réseau central ; et
dans lequel l'appareil de communication est un premier dispositif de réseau d'accès, configuré pour accéder soit au premier élément de réseau central ou au second élément de réseau central ou à un élément de réseau central autre que le premier ou le second élément de réseau central, et dans lequel le premier dispositif de réseau d'accès est configuré pour déterminer que le terminal doit effectuer un transfert vers un second dispositif de réseau d'accès, configuré pour accéder à la fois au premier élément de réseau central et au second élément de réseau central et dans lequel la détermination de l'élément de réseau central desservant le terminal comprend la détermination de l'élément de réseau central desservant le terminal après le transfert.

6. Appareil selon la revendication 5, dans lequel l'unité d'émetteur-récepteur (803) configurée pour obtenir des informations de charge de réseau central, comprend un émetteur-récepteur configuré pour recevoir les informations de charge de réseau central en provenance du second dispositif de réseau d'accès.

7. Appareil selon la revendication 5 ou 6, dans lequel les informations de charge de réseau central comprennent un ou plusieurs des éléments suivants :
une quantité de dispositifs terminaux desservis par le premier élément de réseau central à l'aide du second dispositif de réseau d'accès et/ou une quantité de dispositifs terminaux desservis par le second élément de réseau central à l'aide du second dispositif de réseau d'accès ; ou
l'utilisation de ressources et/ou d'une quantité de dispositifs terminaux du premier élément de réseau central et/ou du second élément de réseau central.

8. Appareil selon la revendication 5, dans lequel l'unité d'émetteur-récepteur (803) configurée pour obtenir des informations de charge de réseau central, comprend un émetteur-récepteur configuré pour recevoir les informations de charge de réseau central en provenance de l'élément de réseau central auquel il accède ; dans lequel le réseau central auquel il accède est l'un du premier ou second élément de réseau central ; et dans lequel les informations de charge comprennent uniquement des informations sur l'élément de réseau central auquel accède le premier dispositif de réseau d'accès.

9. Appareil de communication, comprenant :
une unité de traitement (901), configurée pour déterminer des informations de charge de réseau central, dans lequel les informations de charge de réseau central indiquant la charge d'un premier élément de réseau central et/ou la charge d'un second élément de réseau central, et l'appareil de communication est un dispositif de réseau d'accès qui accède au premier élément de réseau central et au second élément de réseau central ; et
une unité d'émetteur-récepteur (903), configurée pour envoyer les informations de charge de réseau central à un premier dispositif de réseau d'accès,
dans lequel les informations de charge de réseau central comprennent un ou plusieurs des éléments suivants :
- des informations de surcharge du premier élément de réseau central et/ou du second élément de réseau central, dans lequel les informations de surcharge comprennent une première indication indiquant un niveau de surcharge du premier élément de réseau central et un type du premier élément de réseau central, et une seconde indication indiquant un niveau de surcharge du second élément de réseau central et un type du second élément de réseau central ; ou
- des informations de capacité du premier élément de réseau central et/ou du second élément de réseau central, dans lequel les informations de capacité indiquent une relation de capacité entre le premier élément de réseau central et le second élément de réseau central ; dans lequel l'appareil de communication est un second dispositif de réseau d'accès configuré pour accéder à la fois au premier élément de réseau central et au second élément de réseau central ; et dans lequel le second dispositif de réseau d'accès est déterminé par le premier dispositif de réseau d'accès en tant que noeud de réseau d'accès vers lequel le terminal doit effectuer un transfert.

10. Appareil selon la revendication 9, dans lequel les informations de charge de réseau central comprennent également un ou plusieurs des éléments suivants :
une quantité de dispositifs terminaux desservis par le premier élément de réseau central à l'aide de l'appareil de communication et/ou une quantité de dispositifs terminaux desservis par le second élément de réseau central à l'aide de l'appareil de communication ; ou
l'utilisation de ressources et/ou d'une quantité de dispositifs terminaux du premier élément de réseau central et/ou du second élément de réseau central.

11. Produit de programme informatique comprenant des instructions qui, lorsqu'elles sont exécutées par un ordinateur, amènent l'ordinateur à mettre en œuvre le procédé selon l'une quelconque des revendications 1 à 4.
